# EUROPÄISCHE PATENTSCHRIFT

(11) **EP 2 312 408 B1**
(45) Veröffentlichungstag und Bekanntmachung des Hinweises auf die Patenterteilung: **14.12.2011**
(21) Anmeldenummer: 09172917.8
(22) Anmeldetag: 13.10.2009
(51) Int. Cl.: G05B 19/05

(54) **Modulare Sicherheitssteuerung**
Modular safety control
Commande de sécurité modulaire

(43) Veröffentlichungstag der Anmeldung: 20.04.2011
(73) Patentinhaber: SICK AG, 79183 Waldkirch (DE)
(72) Erfinder: Weddingfeld, Klaus, 79183 Waldkirch (DE); Koepcke, Oliver, 79395 Neuenburg (DE)
(74) Vertreter: Ludewigt, Christoph

(56) Entgegenhaltungen:
- EP-A1- 2 098 924
- EP-A2- 1 744 230

## Beschreibung

Die Erfindung betrifft eine modulare Sicherheitssteuerung und ein Verfahren zum Programmieren oder Umprogrammieren einer Sicherheitsteuerung nach dem Oberbegriff von Anspruch 1 beziehungsweise 12.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitssteuerung konfiguriert und verschaltet werden. Die Programmierung der Sicherheitssteuerung wird zwar durch professionelle grafische Programmieroberflächen unterstützt, erfordert aber vor allem deshalb vertiefte Kenntnisse, weil jeder Fehler in der Sicherheitssteuerung zu einer Gefährdung von Personen führt.

Die in der Praxis eingesetzten Maschinenkonzepte werden zunehmend modular und erlauben eine Vielzahl von Optionen. Jede Veränderung der Maschine, die eine Steuerungsfunktion betrifft, erfordert eine Anpassung des Steuerungsprogramms, da eine Funktion geändert oder die angeschlossene Sensorik oder Aktorik verändert wird. Es ist bekannt, auch die Sicherheitssteuerungen selbst modular aufzubauen, so dass auch ungeschultes Personal in der Lage ist, ein zusätzliches Modul anzufügen und damit weitere Sensoren oder Aktoren anzuschließen. Die Anpassung des Steuerungsprogramms dagegen muss ein Steuerungsexperte vornehmen.

In begrenztem Umfang werden vorhandene Steuerungsprogramme mit verschiedenen Betriebsarten ausgestattet, um mit Veränderungen und Erweiterungen der Sicherheitssteuerung umgehen zu können. Wird jedoch eine Anlage in einer Linie betrieben oder mit weiteren Optionen ausgerüstet, die unter Umständen zusätzliche Signale erfordern, so sind diese Betriebsarten nicht mehr flexibel genug. Es bedarf dann einer Umprogrammierung, die nur entsprechend ausgebildetes Personal leisten kann.

Aus der EP 1 277 378 B1 ist eine Sicherheitsschaltgeräte-Modulanordnung bekannt. Dabei bilden Eingangsmodule, also solche mit Anschlüssen für Signalgeber, und Ausgangsmodule, die in Abhängigkeit der zugeführten Eingangssignale sicher zwischen zwei Schaltzuständen hin- und herschalten, eine Modulreihe. Nach der Lehre der EP 1 277 378 B1 wirken Eingangsmodule nur auf bestimmte Ausgangsmodule, wobei diese Zuordnung von der Position innerhalb der Modulreihe abhängt. Damit werden Zuordnungsfehler zwischen Eingängen und Ausgängen reduziert. Dazu müssen aber die Plätze für die Module fest vorgegeben sein, so dass eine Erweiterung über die vorgegebenen Plätze hinaus nicht möglich ist. Vor allem wird lediglich eine Zuordnung der Anschlüsse vorgenommen. Die Erstellung des Steuerungsprogramms ist nicht Gegenstand der EP 1 277 378 B1. Wird die Anlage verändert, so muss dem herkömmlichen Vorgehen folgend ein Steuerungsexperte das benötigte Steuerungsprogramm erstellen oder modifizieren.

Die Norm IEC 61131 zur Programmierung von Steuerungssystemen beschreibt in IEC 61131-3 die grafische Programmierung mittels Funktionsbausteinen sowie eine IO-Schnittstellenbeschreibung in physikalisch-technischen Werten in IEC 61131-2. Die Konfiguration der Eingangs- und Ausgangsbeschaltung und deren Schnittstellen zu Sensoren und Aktoren allerdings ist nicht standardisiert.

Die herkömmlichen Lösungen sind zeit- und kostenintensiv, weil das Fachwissen von Steuerungsexperten erforderlich ist.

Die EP 1 744 230 A2 beschreibt eine sichere programmierbare Steuerung mit mehreren I/O-Modulen, an denen beispielsweise ein Notausschalter, ein Lichtvorhang, eine Trittmatte oder ein Laserscanner angeschlossen werden kann. Ein CPU-Modul fragt Identifikationsnummern angeschlossener I/O-Module ab und liest aus einem Speicher jeweils einen zu der Identifikationsnummer passenden Funktionsblock aus. Diese Funktionsblöcke werden dann zu einem Sicherheitsprogramm verknüpft und von dem CPU-Modul ausgeführt.

Aus der EP 2 098 924 A1 ist ein Verfahren und eine Vorrichtung zum Programmieren und/oder Konfigurieren einer Sicherheitssteuerung bekannt. Dabei können durch Teilapplikationen mindestens zwei Funktionseinheiten, also Sensoren oder Aktoren, gleichzeitig ausgewählt und ein Steuerungsprogramm der Sicherheitssteuerung automatisch erweitert werden, um die Teilapplikation einzubeziehen.

Es ist daher Aufgabe der Erfindung, eine Sicherheitssteuerung anzugeben, die auf einfache und flexible Weise für eine große Zahl von Anwendungen einsetzbar ist.

Diese Aufgabe wird durch eine modulare Sicherheitssteuerung gemäß Anspruch 1 und ein Verfahren zum Programmieren oder Umprogrammieren einer Sicherheitssteuerung gemäß Anspruch 12 gelöst. Dabei geht die Erfindung von dem Grundgedanken aus, fertige Steuerungsprogramme für eine Vielzahl von Anwendungen vorzubereiten und in der Sicherheitssteuerung nach Bedarf das geeignete Steuerungsprogramm auszuwählen. Die Auswahl des Steuerungsprogramms erfolgt dabei automatisch entsprechend dem Typ und der Anordnung der Module der Sicherheitssteuerung. Die Sicherheitssteuerung erkennt Typ und Anordnung der Module und wählt selbsttätig das zugehörige Steuerungsprogramm aus. Dabei wird hier und im Folgenden der Begriff Modul häufig als Abkürzung für Anschlussmodul verwendet.

Die Erfindung hat den Vorteil, dass die Steuerungsprogramme bereits ab Werk vorliegen oder von dort bezogen werden und damit das Personal vor Ort keinerlei Kenntnisse benötigt, um das Steuerungsprogramm zu erstellen, auszuwählen oder anzupassen. Es entsteht kein Programmieraufwand nach Änderung der Applikation oder Erweiterung der Steuerung durch weitere Module. Für das Umstecken oder Ergänzen von Anschlussmodulen ist keine besondere Schulung oder Ausbildung erforderlich. Durch diese Vereinfachungen werden erhebliche Einsparungen bei Kosten und Zeitaufwand ermöglicht.

In der Sicherheitssteuerung ist beispielsweise eine Tabelle hinterlegt, die einer bestimmten Konfiguration von Anschlussmodulen jeweils ein zugehöriges Steuerungsprogramm zuordnet. Wird eine Konfiguration aufgebaut oder verändert, also Anschlussmodule hinzugefügt, entfernt oder vertauscht, so wird ein vorab getestetes, möglicherweise auch zertifiziertes Steuerungsprogramm ausgewählt und aktiviert.

Obwohl im Grunde schon zwei vorab in der Sicherheitsteuerung hinterlegte Steuerungsprogramme genügen, um die Erfindung einzusetzen, gibt es in der Praxis schon mit relativ wenigen Modultypen und wenigen Anschlussmodulen viele Kombinationsmöglichkeiten, so dass eine derartige Tabelle rasch sehr groß werden kann. In der Sicherheitssteuerung muss deshalb nicht notwendig zu jeder denkbaren Kombination ein Steuerungsprogramm abgelegt sein. Wenn eine Modulkonfiguration gewählt wird, zu der kein Steuerungsprogramm hinterlegt ist, so ist diese Anwendung zunächst nicht vorgesehen, könnte aber durch übliche Programmierung abgebildet werden.

Ein erstes Anschlussmodul ist bevorzugt an die Steuerungseinheit und die weiteren Anschlussmodule sind an jeweils nur ein vorgeordnetes Anschlussmodul angeschlossen, so dass die Steuerungseinheit mit den Anschlussmodulen eine Modulreihe bildet. So entsteht eine übersichtliche, auf einfache Weise erweiterbare Sicherheitssteuerung.

Die Anschlussmodule sind bevorzugt in jeweils einem Gehäuse mit untereinander identischer Außengeometrie untergebracht, wobei jedes Anschlussmodul eine Verbindung für ein vorgeordnetes Modul und eine Verbindung für ein nachgeordnetes Modul der Modulreihe aufweist. Der modulare Ansatz wird so konsequent auch für die äußere Form der Module fortgesetzt, um Erweiterungen und Veränderungen auf einfache Weise zu ermöglichen.

Die Steuerungseinheit bildet bevorzugt ein Steuerungsmodul, ist insbesondere in einem Gehäuse mit identischer Außengeometrie wie das Gehäuse eines Anschlussmoduls untergebracht. Auch die Steuerungseinheit integriert sich so nahtlos in die Modulreihe.

Der Typ eines Anschlussmoduls hängt bevorzugt von der Anzahl an Eingängen und/oder Ausgängen ab. Die Erweiterung und Veränderung der Sicherheitssteuerung betrifft häufig die Anzahl von Anschlüssen. Deshalb werden schon in herkömmlichen Konzepten einer modularen Sicherheitssteuerung Anschlussmodule mit unterschiedlichen Anschlusskonfigurationen verwendet. So gibt es Eingangsmodule, die eine Anzahl von Eingängen, Ausgangsmodule mit einer Anzahl von Ausgängen und gemischte Ein-/Ausgangsmodule. Um anhand des Typs der Anschlussmodule ein Steuerungsprogramm auszuwählen, können aber auch andere Modalitäten als die Anzahl von Anschlüssen herangezogen werden. Beispiele sind Typennummem oder die vorgesehene Verbindung zur Kommunikation innerhalb der Sicherheitssteuerung. Ebenso wie derartige Typen als unterschiedlich behandelt werden können, um eine größere Vielfalt an wählbaren Steuerungsprogrammen zu erreichen, ist auch umgekehrt denkbar, verschiedene Typen von Anschlussmodulen bei der Auswahl des Steuerungsprogramms als gleich zu behandeln, um mit einer geringeren Anzahl vorab implementierter Steuerungsprogramme auszukommen.

Die Anschlussmodule sind bevorzugt dafür ausgebildet, sich bei der Steuerungseinheit mit einer Information über ihren eigenen Typ anzumelden, oder die Steuerungseinheit ist dafür ausgebildet, den Typ eines angeschlossenen Anschlussmoduls abzufragen. Auf diese Weise ist, entweder auf Initiative des Anschlussmoduls oder der Steuerungseinheit, in der Steuerungseinheit die Modulkonfiguration bekannt, also Typ und Reihenfolge der angeschlossenen Anschlussmodule, so dass ein geeignetes, der erkannten Modulkonfiguration zugehöriges Steuerungsprogramm ausgewählt und aktiviert werden kann.

Mindestens einige aus der Vielzahl von Steuerungsprogrammen unterscheiden sich bevorzugt untereinander durch die Reihenfolge der Anschlussmodule und die Logikregeln zum Erzeugen von Steuerungssignalen in Abhängigkeit von Eingangssignalen. Dieser Unterschied schlägt sich darin nieder, dass das Steuerungsprogramm einen Code enthält, der für die Zusammenarbeit mit der entsprechenden Konfiguration an Anschlussmodulen und angeschlossenen Sensoren und Aktoren vorgesehen ist. Eine Änderung der Reihenfolge der Anschlussmodule führt also zur Auswahl eines anderen Steuerungsprogramms, welches sich in seinen Logikregeln unterscheidet.

Mindestens einige aus der Vielzahl von Steuerungsprogrammen unterscheiden sich bevorzugt untereinander durch die an den Eingängen und/oder Ausgängen anzuschließenden Sensoren und/oder Aktoren. Das Steuerungsprogramm, welches zu einer Modulkonfiguration mit bestimmten Typen und Reihenfolgen von Anschlussmodulen gehört, erwartet dabei andere Sensoren oder Aktoren an den Anschlüssen als ein anderes Steuerungsprogramm, welches zu einer anderen Modulkonfiguration gehört. Bei einer entsprechenden Veränderung der Sicherheitssteuerung im Feld müssen dann natürlich auch die Sensoren und Aktoren richtig angeschlossen werden, so dass die angeschlossenen Sensoren und Aktoren zu dem durch die Modulkonfiguration gewählten Steuerungsprogramm passen.

Mindestens einige aus der Vielzahl von Steuerungsprogrammen unterscheiden sich bevorzugt untereinander durch die Anzahl angeschlossener Anschlussmodule. Dies ist ein wichtiger Fall, um die Modulkonfiguration zu ändern, sei es durch Hinzufügen oder durch Entfernen von Anschlussmodulen und den zugehörigen Sensoren und Aktoren.

Die Steuerungseinheit weist bevorzugt eine Schnittstelle für externe Steuerungseinheiten auf, wobei die Auswahl des Steuerungsprogramms von angeschlossenen externen Steuerungseinheiten und/oder deren Anschlussmodulen abhängig ist. Hier wird die Modulkonfiguration noch weiter gefasst und nicht nur die an der Steuerungseinheit angeschlossenen Anschlussmodule werden berücksichtigt, sondern auch verbundene weitere Steuerungseinheiten. Damit wird auch eine Multimasterlösung unterstützt. Mehrere verbundene Modulreihen beeinflussen die Auswahl des aktivierten Steuerungsprogramms eines einzelnen Masters, also der Steuerungseinheit. Dabei kann das Steuerungsprogramm nur schlicht berücksichtigen, ob überhaupt eine weitere externe Steuerungseinheit angeschlossen ist, oder auch im Detail Typ und Reihenfolge der an die externe Steuerungseinheit angeschlossenen Anschlussmodule berücksichtigen. Die Anzahl der möglichen Kombinationen steigt dabei entsprechend an.

Die Steuerungseinheit ist bevorzugt dafür ausgebildet, nach erkannter Veränderung von Typ und Reihenfolge angeschlossener Anschlussmodule das ausgewählte Steuerungsprogramm erst nach einer Autorisierung auszuführen. Der Wechsel des Steuerungsprogramms wird so abgesichert. Dazu genügt im einfachsten Fall eine Benutzerbestätigung, die aber auch durch Passwort oder ein anderes Sicherungssystem geschützt sein kann, so dass nur besonders autorisierte Personen in der Lage sind, mit einer entsprechenden Karte oder einem Schlüssel die Freigabe zu erteilen. Solange die Freigabe fehlt, bleibt die Sicherheitssteuerung inaktiv, denn die aktuelle Modulkonfiguration passt nicht mehr zu dem früheren Steuerungsprogramm, und das neue, passende Steuerungsprogramm darf noch nicht aktiv gesetzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Dabei wird das Steuerungsprogramm bevorzugt dadurch festgelegt, dass Anschlussmodule hinzugefügt, entfernt oder vertauscht werden. Dies ist eine sehr einfache, auch für ungeschultes Personal durchführbare Änderung, die wegen der vorab hinterlegten Steuerungsprogramm ohne jeglichen Aufwand zu sicheren Steuerungsprogrammen führt.

Das Steuerungsprogramm wird bevorzugt dadurch festgelegt, dass eine externe Steuerungseinheit angeschlossen, entfernt oder in ihrer Modulkonfiguration verändert wird. So lässt sich das Verfahren auch auf den Fall erweitern, in dem mehrere Sicherheitssteuerungen in einem Netzverbund zusammenarbeiten.

Nach dem Programmieren oder Umprogrammieren werden bevorzugt die Verbindungen von Sensoren an Eingänge und/oder die Verbindungen von Aktoren an Ausgänge verändert. Ein häufiger Anwendungsfall für ein Umprogrammieren ist das Hinzufügen oder Entfernen von Sensoren und Aktoren. Damit das Steuerungsprogramm richtig funktioniert, ist die von der Sicherheitssteuerung überwachte Anlage auch in der erwarteten Form aufzubauen. Mit entsprechenden Kommunikationsprotokollen, beispielsweise IO-Link, ist auch denkbar, an den Eingängen und Ausgängen der Anschlussmodule die Identität des angeschlossenen Geräts abzufragen. So prüft die Sicherheitssteuerung, ob die sicherheitsrelevanten Anschlüsse der Anlage korrekt und entsprechend dem durch die Modulkonfiguration ausgewählten Steuerungsprogramm ausgeführt sind.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine sehr vereinfachte Darstellung eine modularen Sicherheitssteuerung in einer ersten Modulkonfiguration ABC;
- Fig. 2: eine Darstellung gemäß Figur 1 nach Vertauschen zweier Anschlussmo- dule;
- Fig. 3: eine beispielhafte Modul- und Anschlusskonfiguration;
- Fig. 4: eine grafische Darstellung der Logikregeln zu der Modul- und Anschluss- konfiguration gemäß Figur 3;
- Fig. 5: eine weitere Modul- und Anschlusskonfiguration gemäß Figur 3 nach Ver- tauschen von Anschlussmodulen;
- Fig. 6: eine grafische Darstellung der durch das Vertauschen gemäß Figur 5 ver- änderten Logikregein;
- Fig. 7: eine weitere Modul- und Anschlusskonfiguration gemäß Figur 3 nach weite- rem Vertauschen von Anschlussmodulen und Veränderung der ange- schlossenen Sensoren ;
- Fig. 8: eine grafische Darstellung der durch das Vertauschen gemäß Figur 7 ver- änderten Logikregeln;
- Fig. 9: eine weitere Modul- und Anschlusskonfiguration gemäß Figur 3 nach Hin- zufügen eines Anschlussmoduls;
- Fig. 10: eine grafische Darstellung der durch das Hinzufügen eines Moduls gemäß Figur 9 veränderten Logikregeln;
- Fig. 11: eine weitere Modul- und Anschlusskonfiguration gemäß Figur 3, wobei eine weitere externe Steuerung angeschlossen wird; und
- Fig. 12: eine grafische Darstellung der durch das Anschließen der externen Steue- rung gemäß Figur 11 veränderten Logikregeln; und
- Fig. 13: eine Übersichtsdarstellung einer beispielhaften Anlage mit Sensoren und Aktoren und ihren Anschlüssen an eine modulare Sicherheitssteuerung.

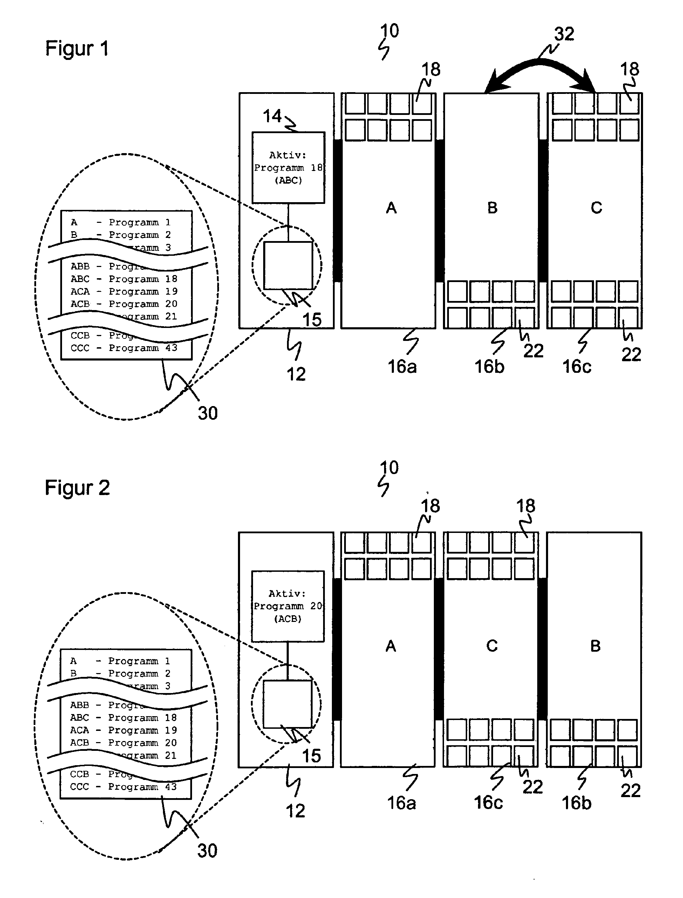

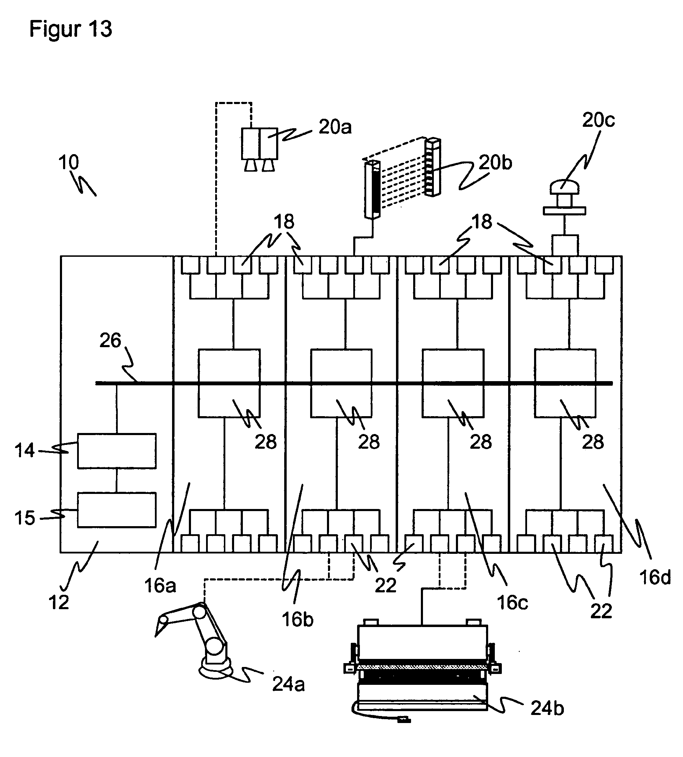

Figur 13 zeigt eine modulare Sicherheitssteuerung 10 mit einem Steuerungsmodul 12, welches eine sichere Steuerungseinheit 14 aufweist, also beispielsweise einen Mikroprozessor oder einen anderen Logikbaustein. Die Steuerungseinheit 14 hat Zugriff auf einen Speicherbereich 15, in dem mehrere Steuerungsprogramme abgelegt sind und der weiter unten im Zusammenhang mit Figur 1 näher erläutert wird.

Mit dem Steuerungsmodul 12 sind sequentiell vier Anschlussmodule 16a-d verbunden. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten. Schließlich sind die Module 12, 16a-d vereinfacht dargestellt und können weitere Elemente aufweisen, beispielsweise je eine LED für jeden Anschluss in übersichtlicher, die Zugehörigkeit optisch hervorhebender Anordnung.

Die Sicherheitssteuerung hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalters 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

Ein Roboter 24a und eine Abkantpresse 24b sind als Beispiele für Aktoren, die Bedienpersonal bei unzulässigem Eingriff gefährden können, bevorzugt zweikanalig an Ausgänge 22 angeschlossen und können somit von der Sicherheitssteuerung 10 einen Abschaltbefehl erhalten, um bei Erkennung einer Gefährdung oder eines unzulässigen Eingriffs durch Sicherheitssensoren 20a-b die Aktoren 24a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die Sicherheitssteuerung 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Sicherheitssteuerung 14 und den Eingängen 18 bzw. den Ausgängen 22 besteht eine Backplane genannte serielle Kommunikationsverbindung 26, die insbesondere ein Bus ist und auf einem seriellen Standard, einem Feldbusstandard, wie IO-Link, Profibus, CAN oder auch einem proprietären Standard basieren und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 18 können auch Auswertungsaufgaben übernehmen oder gemeinsam mit der Steuerungseinheit 14 verteilte Auswertungen vornehmen, die von einfachen Bool'schen Verknüpfungen bis hin zu komplexen Auswertungen, etwa einer dreidimensionalen Sicherheitskamera, reichen können.

Die Sicherheitssteuerung 10 kann über ein Gateway, welches ein eigenes Modul bildet oder in die Sicherheitssteuerung 14 integriert ist, an eine externe Anlagensteuerung angeschlossen sein, welche mit nicht sicherheitsrelevanten Steuerungsaspekten befasst ist. Die Anbindung kann drahtlos oder drahtgebunden, in der Praxis meist über einen Feldbus erfolgen. Gibt die externe Steuerung einen Befehl an einen der Aktoren 24, und zwar alternativ über die Ausgänge 22, welche auch Abschaltsignale ausgeben können, oder auf eigene Ausgänge, so wird er nur dann wirksam, wenn die Sicherheitssteuerung 14 zustimmt, also etwa durch UND-Verknüpfung von Ansteuerung und Zustimmungssignal. Damit wird verhindert, dass die externe Anlagensteuerung eine gefährliche Situation schafft. Die externe Steuerung kann umgekehrt eine Abschaltung der Aktoren 24 nicht verhindern, da die Sicherheitsaufgaben durch die Sicherheitssteuerung 10 gesteuert werden.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe. Denkbar ist auch, dass mehrere Steuerungsmodule 12 als Kopf mehrerer Modulreihen dezentral angeordnet sind, etwa jeweils in der Nähe der zu überwachenden Teile der Gesamtanlage, die untereinander über einen Feldbus kommunizieren.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Konfiguration und Programmierung der Sicherheitssteuerung 10 erfolgt in der Praxis über eine grafische Benutzeroberfläche, mit deren Hilfe ein Steuerungsprogramm erstellt und anschließend aufgespielt wird.

Figur 1 zeigt nochmals die Sicherheitssteuerung 10 in vereinfachter Darstellung. Dabei bezeichnen hier wie im Folgenden gleiche Bezugszeichen die gleichen Merkmale. Die Anschlussmodule 16a-c unterscheiden sich untereinander in der Art und Anzahl ihrer Anschlüsse. So ist das erste, als Typ "A" bezeichnete Anschlussmodul 16a ein reines Eingangsmodul mit acht Eingängen 18, das zweite, als Typ "B" bezeichnete Anschlussmodul 16b ein reines Ausgangsmodul mit acht Ausgängen 22 und das dritte, als Typ "C" bezeichnete Anschlussmodul 16c ein gemischtes Ein-/Ausgangsmodul mit acht Eingängen 18 und acht Ausgängen 22. Die Erfindung umfasst auch andere Typen von Anschlussmodulen, die sich voneinander durch eine Anzahl von Eingängen und Ausgängen oder durch weitere Eigenschaften unterscheiden.

Bei der in Figur 1 dargestellten Reihenfolge des Anschlusses entsteht eine Modulkonfiguration, die sich entsprechend der Typen der Anschlussmodule 16a-c mit "ABC" abkürzen lässt. Der Typ des Steuerungsmoduls 12 könnte zusätzlich berücksichtigt werden.

In der Steuerungseinheit 14 läuft ein Steuerungsprogramm, welches nach vorgegebenen Logikregeln die Eingangssignale der Sensoren 20 verknüpft und daraus Ausgangssignale an die Aktoren 24 erzeugt. Wie dargestellt, entspricht das ausgeführte, aktive Steuerungsprogramm "Programm 18" der gegebenen Konfiguration "ABC".

Die Steuerungseinheit 14 hat Zugriff auf den Speicher 15 mit einer Vielzahl weiterer Steuerungsprogramme, die jeweils anstelle des aktiven Steuerungsprogramms verwendbar sind. In dem Speicher steht also beispielsweise eine Tabelle 30, die den verschiedenen denkbaren Modulkonfigurationen jeweils ein fertiges Steuerungsprogramm zuordnet.

Wird die Modulkonfiguration verändert, so sucht die Steuerungseinheit 14 in der Tabelle 30 nach dem zu der neuen Modulkonfiguration passenden Steuerungsprogramm. Eine beispielhafte derartige Veränderung ist die durch den Pfeil 32 angedeutete Vertauschung der Anschlussmodule 16b, 16c, die zu der in Figur 2 dargestellten veränderten Modulkonfiguration "ACB" führt.

Die Steuerungseinheit 14 erkennt die Modulkonfiguration über die Kommunikationsverbindung 26. Sie entnimmt der Tabelle 30, dass nunmehr statt "Programm 18" das der veränderten Modulkonfiguration "ACB" entsprechende Steuerungsprogramm "Programm 20" zu verwenden ist, und aktiviert das neue, passende Steuerungsprogramm.

Allein durch Veränderung der Modulkonfiguration, in dem gezeigten Beispiel durch Vertauschen zweier Anschlussmodule, ist damit die Steuerungseinheit 14 umprogrammiert.

Die Tabelle 30 muss nicht vollständig besetzt sein. Findet die Steuerungseinheit 14 zu einer erkannten Modulkonfiguration kein Steuerungsprogramm, so wird eine Ausnahmeregel angewandt, in der beispielsweise das neue Steuerungsprogramm von Hand programmiert werden muss oder in der zunächst das bisherige Steuerungsprogramm weiterverwendet wird.

Es ist nicht zwingend erforderlich, die Zuordnung von Modulkonfigurationen zu Steuerungsprogrammen in einer Tabelle abzulegen. Auch kann anstelle eines Speichers 15 ein anderes Medium verwendet werden, um ein zu der erkannten Modulkonfiguration passendes Steuerungsprogramm einzuspielen, beispielsweise ein externe Speicher, eine übergeordnete Steuerung, eine CD oder sogar eine Internetverbindung.

Es ist denkbar, dass das Steuerungsmodul 12 selbst Anschlüsse 18, 22 aufweist. Eine zulässige, minimale Modulkonfiguration ist in diesem Fall das Steuerungsmodul selbst, das zugleich Anschlussmodul 16 und Steuerungseinheit 14 ist.

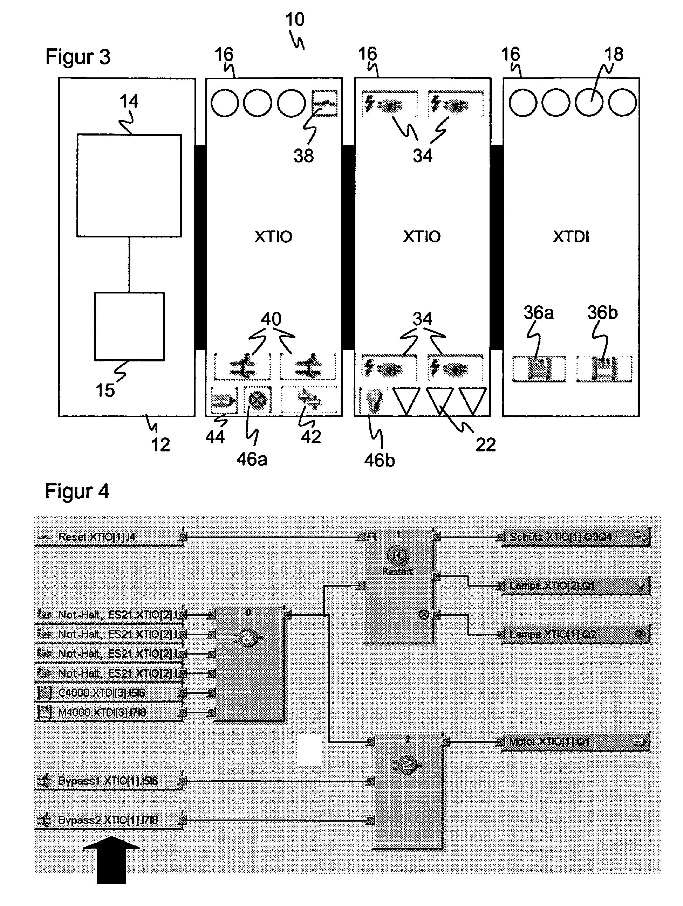

Unter Bezugnahme auf die Figuren 3 bis 12 werden nachstehend anhand einer Beispielanwendung die verschiedenen Möglichkeiten einer Änderung der Modulkonfiguration und der beispielhaft resultierenden Änderung des Steuerungsprogramms erläutert. Die Beispielapplikation ist eine andere als in den bisher beschriebenen Figuren. Es sind nur zwei Typen von Anschlussmodulen 16 vorgesehen, nämlich ein Modultyp "XTIO", welches in der oberen Hälfte vier Eingänge 18 und in der unteren Hälfte weitere vier Eingänge 18 und vier Ausgänge 22 aufweist, sowie ein Modultyp "XTDI" mit vier Eingängen 18 in der oberen Hälfte und vier Eingängen 18 in der unteren Hälfte. Das Steuerungsmodul 12 wird als "CPU1" bezeichnet.

Die Anlage der Beispielanwendung umfasst vier Nothaltschalter 34, ein Sicherheitslichtgitter 36a des Typs "C4000", ein Sicherheitslichtgitter 36b des Typs "M4000", einen Resettaster 38, zwei Bypassschalter 40, einen Schütz 42, einen Motor 44 sowie zwei Lampen 46a-b. Diese Elemente der Anlage sind jeweils nur durch ein Piktogramm an ihrem jeweiligen Anschluss 18, 22 dargestellt. Manche Elemente belegen zwei Anschlüsse 18, 22, sind also aus sicherheitstechnischen Gründen zweikanalig angeschlossen. Die Darstellung entspricht im Wesentlichen einer Ansicht aus der Konfigurationssoftware "FlexiSoft" für Sicherheitssteuerungen, die über die Webseiten der Anmelderin verfügbar ist.

Figur 3 zeigt eine erste Modulkonfiguration für diese Beispielanwendung, bei der drei Anschlussmodule 16 mit dem Steuerungsmodul 12 die Konfiguration "CPU1 XTIO XTIO XTDI" bilden. Figur 4 zeigt eine grafische Darstellung zugehöriger Logikregeln zur Verknüpfung der Eingangssignale von den Sensoren 20 auf Ausgangssignale an die Aktoren 24. Die in Figur 3 als Piktogramm dargestellten angeschlossenen Sensoren 20 und Aktoren 24 sind in Figur 4 mit ihrem Namen als Text dargestellt. Dabei ist an den Namen jeweils das Anschlussmodul und der Anschluss angefügt. So bedeutet beispielsweise "Bypass1-XTIO[1].I5I6", dass der in Figur 3 linke Bypassschalter 40 mit dem Namen "Bypass1" an den Eingängen mit der Nummer "15" und "16" des ersten XTIO-Moduls "XTIO[1]" angeschlossen ist, wobei Nummerierungen jeweils von links nach rechts und von oben nach unten erfolgen. Aus diesem Beispiel ergibt sich ganz analog die Codierung der übrigen Namen.

Die grafischen Logikregeln bestimmen das zugehörige Steuerungsprogramm, welches zur Aktivierung in einen beliebigen, von der Steuerungseinheit 14 verarbeitbaren Code übersetzt wird. Diese Übersetzung oder Compilierung erfolgt üblicherweise ab Werk, also nicht zur Laufzeit. Die in Figur 4 gezeigten Logikregeln sind rein beispielhaft zur Erläuterung des erfinderischen Grundgedankens, und die Erfindung umfasst beliebige andere Steuerungsprogramme, die auch nicht notwendig grafisch programmiert werden.

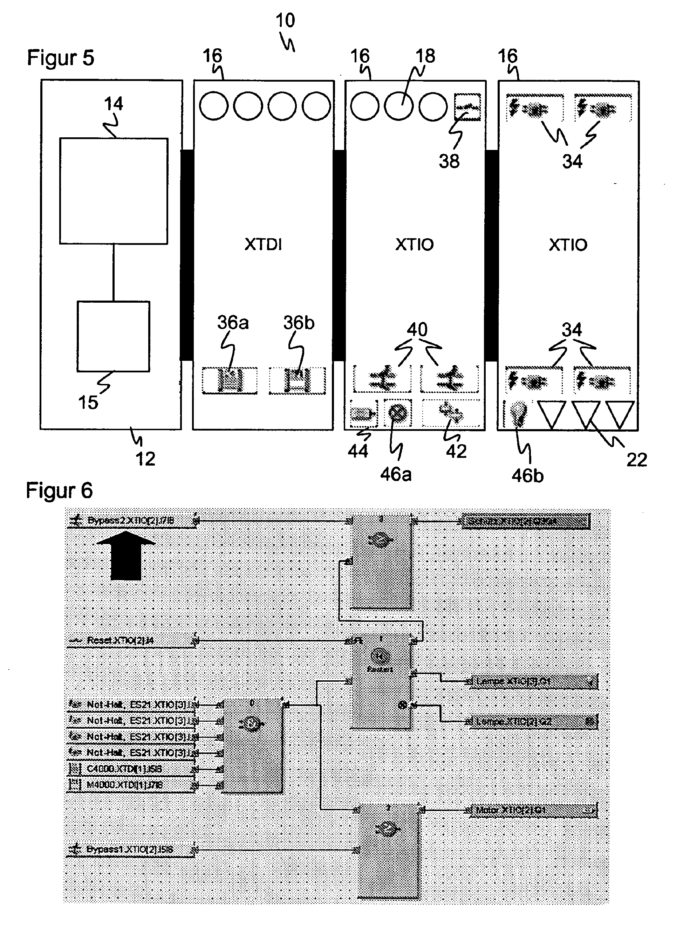

In Figur 5 ist die Modulkonfiguration beispielhaft durch eine zyklische Vertauschung verändert, so dass nun die Modulkonfiguration "CPU1 XTDI XTIO XTIO" vorliegt. Die Steuerungseinheit 12 aktiviert deshalb ein anderes, zu der neuen Modulkonfiguration passendes Steuerungsprogramm, dessen beispielhafte Logikregeln in Figur 6 gezeigt sind. Dabei wirkt einer der beiden Bypassschalter 40 ("Bypass2") nicht mehr wie in Figur 4 auf den Motor 44, sondern auf den Schütz 42. Die Veränderung ist in den Figuren 4 und 6 jeweils durch einen Pfeil hervorgehoben. Durch die Veränderung der Modulkonfiguration ist somit die Art der Ausführung oder die Funktionsweise, also die Logik des Steuerungsprogramms verändert.

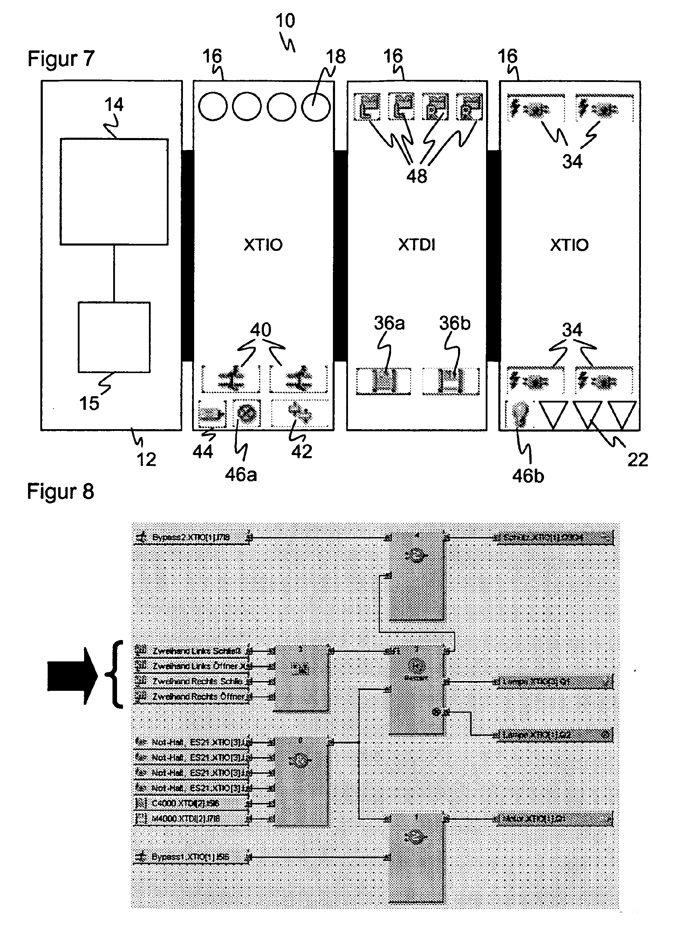

In Figur 7 ist die Modulkonfiguration durch eine andere Vertauschung verändert, so dass nun die Modulkonfiguration "CPU1 XTIO XTDI XTIO" vorliegt. Das danach ausgewählte neue Steuerungsprogramm löst den Restart nicht mehr über den Resettaster 38, sondern über eine Zweihandschaltung 48 aus. Figur 8 zeigt die Logikregeln des veränderten Steuerungsprogramms. Erneut hebt in Figur 8 ein Pfeil die Änderung der Logikregeln hervor. Bei dieser Änderung wird somit die Beschaltung verändert, also die angeschlossenen Sensoren 20 oder Aktoren 24, während die eigentliche Logik gegenüber Figur 6 erhalten ist.

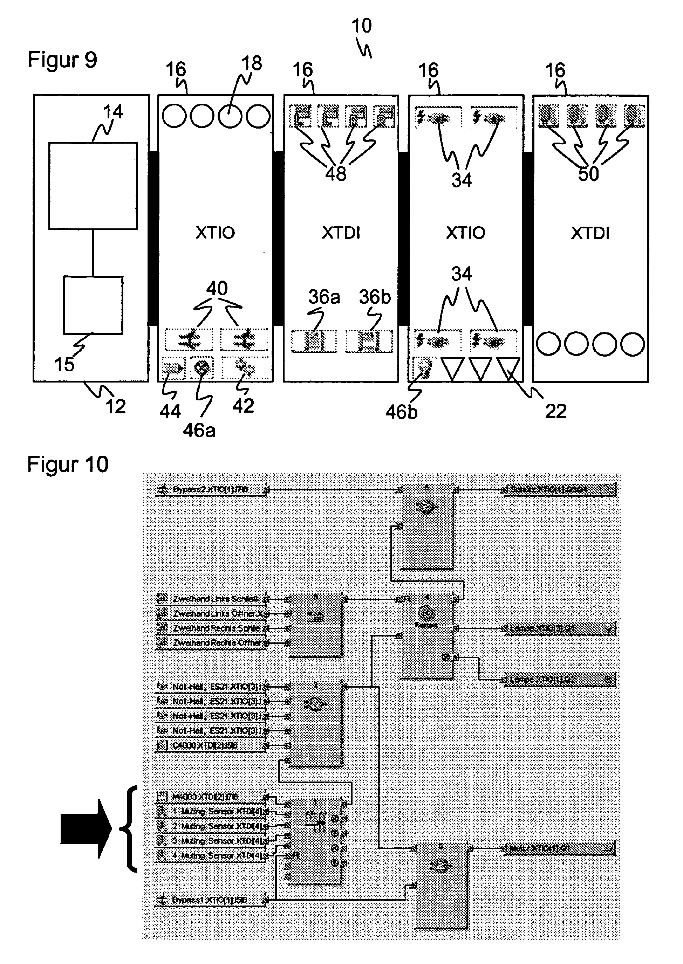

In Figur 9 ist die Modulkonfiguration durch eine Erweiterung mit einem zusätzlichen Anschlussmodul verändert, so dass nun die Modulkonfiguration "CPU1 XTIO XTDI XTIO XTDI" vorliegt. Das zusätzliche Anschlussmodul wird benötigt, um das Lichtgitter 36b durch eine Mutingstation 50 mit Lichtgitter 36b zu ersetzen. In den zugehörigen Logikregeln, die in Figur 10 gezeigt sind, wird wiederum der zusätzliche Regelblock für die Mutingstation 50 durch einen Pfeil hervorgehoben. Die Erfindung ermöglicht gemäß diesem Beispiel eine Erweiterung der Sensorik oder Aktorik, auch durch zusätzliche Anschlussmodule.

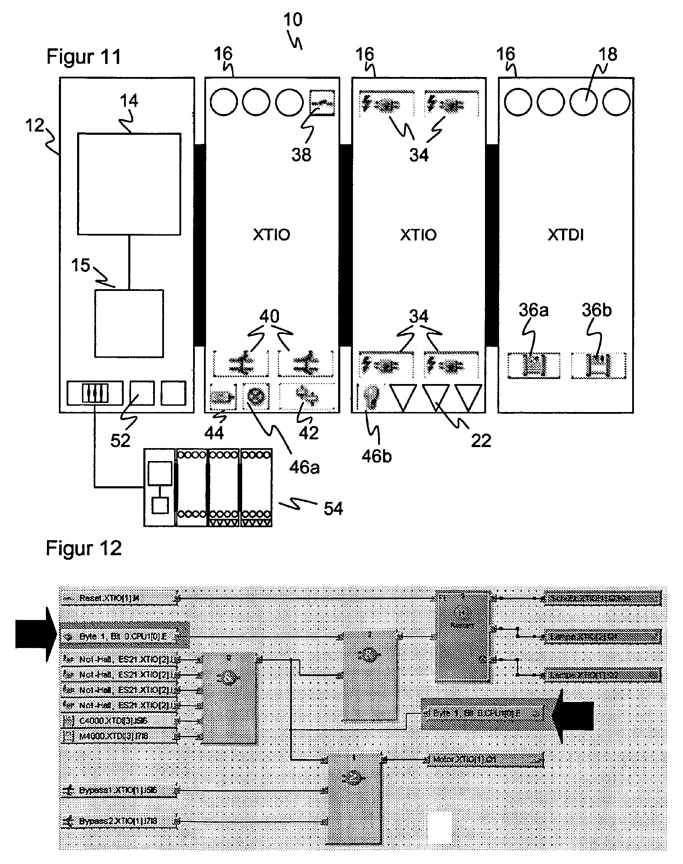

In Figur 11 ist die Modulkonfiguration dadurch verändert, dass eine weitere Station eingebunden ist, beispielsweise eine weitere Maschine oder ein anderes Anlagenteil, von dem ein Nothalt übertragen werden soll. Dazu wird an Eingänge 52 des Steuermoduls 12 eine weitere Sicherheitssteuerung 54 angeschlossen. Die Modulkonfiguration lautet dann "CPU1 XTIO XTIO XTDI EFI1 Adresse 13". Dabei bedeutet "EFI1 Adresse 13", dass sich am Anschluss 1 für externe Sicherheitssteuerungen unter Adresse 13 eine externe Steuerung angemeldet hat. In der zugehörigen Logik gemäß Figur 12 ist der Unterschied zu Figur 4 an den mit Pfeilen hervorgehobenen Stellen erkennbar. Die externe Sicherheitssteuerung 12 überträgt Steuerungsdaten als Eingänge und erhält entsprechende Ausgänge, beispielsweise ein Bit für die Information, ob ein Nothalt ausgelöst wurde. Hier wird also das Steuerungsprogramm in Abhängigkeit von der Anwesenheit externer Sicherheitssteuerungen 54 beziehungsweise Veränderungen an externen Sicherheitssteuerungen ausgewählt.

So wird eine Multimasterlösung realisiert, bei der nicht nur der Aufbau der eigenen Station, also die Modulkonfiguration der Sicherheitssteuerung 10, sondern auch die Präsenz einer anderen Station im Netzwert geprüft wird. Dabei kann auch die Modulkonfiguration der externen Sicherheitssteuerungen die Auswahl des Steuerungsprogramms beeinflussen.

Die Änderungen des Steuerungsprogramms, die in den Beispielen der Figuren 3-12 durch Änderung der Modulkonfiguration erzeugt werden, können untereinander beliebig kombiniert werden. Es kann also eine beliebige Kombination aus Änderung der Logikregeln, Änderung der Beschaltung, Erweiterung der Modulreihe oder der Sensorik/Aktorik vorgenommen werden, und dies kann anhand der eigenen Modulkonfiguration oder der Modulkonfiguration einer angeschlossenen externen Steuerung oder einer Mischung aus beidem ausgelöst werden.

Erfindungsgemäß ist möglich, eine spätere Erweiterung beziehungsweise Änderung der Funktionsweise einer Maschine oder Anlage mit einer passenden Steuerungslösung durchzuführen, ohne die Sicherheitssteuerung 10 mit einem neuen Steuerungsprogramm zu bestücken. Der Hersteller der Anlage oder der Sicherheitssteuerung kann bei der Projektierung diverse Konfigurationen für unterschiedliche Kombinatoriken erstellen, qualifizieren, in die CPU der Steuerungseinheit 14 oder in den Speicher 15 übertragen und dem Kunden ausliefern. Damit wird eine Varianz in der Art und Anzahl der Sensoren 20 oder der Aktoren 24 sowie in der Art der Beschaltung oder in der Art der Ausführung abgedeckt.

Die modulare Sicherheitssteuerung 10 erkennt, beispielsweise beim Start der Anlage, den Aufbau der Station. Anhand der so festgestellten Modulkonfiguration, also des Typs und der Reihenfolge von Anschlussmodulen 15, erfolgt eine Auswahl aus den vorhandenen und vorab erstellten Steuerungsprogrammen. Ist also für die aufgefundene Modulkonfiguration ein Steuerungsprogramm hinterlegt, so wird dieses ausgeführt. Dabei ist denkbar, die Änderung über einen Zustimmungsmechanismus zu bestätigen. Ändert sich später die Funktionsweise der Anlage, so ist nur die Modulkonfiguration entsprechend zu ändern oder zu erweitern, damit das gewünschte Steuerungsprogramm zur Ausführung kommt.

## Patentansprüche

1. Modulare Sicherheitssteuerung (10) mit mindestens einem Anschlussmodul (16), welches mindestens einen Eingang (18) für den Anschluss von Sensoren (20) und/oder mindestens einen Ausgang (22) für den Anschluss von Aktoren (24) aufweist, sowie mit einer Steuerungseinheit (14), die dafür ausgebildet ist, ein Steuerungsprogramm auszuführen, welches an den Ausgängen (22) ein Steuerungssignal in Abhängigkeit von Eingangssignalen an den Eingängen (18) erzeugt,
**dadurch gekennzeichnet,**
**dass** in der Steuerungseinheit (14) eine Vielzahl von fertigen Steuerungsprogrammen für eine Vielzahl von Anwendungen implementiert und dass die Steuerungseinheit (14) dafür ausgebildet ist, anhand des Typs und der Reihenfolge angeschlossener Anschlussmodule (16) eines aus der Vielzahl von Steuerungsprogrammen auszuwählen und auszuführen.

2. Sicherheitssteuerung (10) nach Anspruch 1,
wobei ein erstes Anschlussmodul (16) an die Steuerungseinheit und die weiteren Anschlussmodule (16) an jeweils nur ein vorgeordnetes Anschlussmodul (16) angeschlossen sind, so dass die Steuerungseinheit (14) mit den Anschlussmodulen (16) eine Modulreihe bildet.

3. Sicherheitssteuerung (10) nach Anspruch 2,
wobei die Anschlussmodule (16) in jeweils einem Gehäuse mit untereinander identischer Außengeometrie untergebracht sind, und wobei jedes Anschlussmodul (16) eine Verbindung für ein vorgeordnetes Modul (12, 16) und eine Verbindung für ein nachgeordnetes Modul (16) der Modulreihe aufweist.

4. Sicherheitssteuerung (10) nach einem der vorhergehenden Ansprüche,
wobei die Steuerungseinheit (14) ein Steuerungsmodul (12) bildet, insbesondere in einem Gehäuse mit identischer Außengeometrie wie das Gehäuse eines Anschlussmoduls (16) untergebracht ist.

5. Sicherheitssteuerung (10) nach einem der vorhergehenden Ansprüche,
wobei der Typ eines Anschlussmoduls (16) von der Anzahl an Eingängen (18) und/oder Ausgängen (22) abhängt.

6. Sicherheitssteuerung (10) nach einem der vorhergehenden Ansprüche, wobei die Anschlussmodule (16) dafür ausgebildet sind, sich bei der Steuerungseinheit (14) mit einer Information über ihren eigenen Typ anzumelden, oder wobei die Steuerungseinheit (14) dafür ausgebildet ist, den Typ eines angeschlossenen Anschlussmoduls (16) abzufragen.

7. Sicherheitssteuerung (10) nach einem der vorhergehenden Ansprüche, wobei sich mindestens einige aus der Vielzahl von Steuerungsprogrammen untereinander durch die Reihenfolge der Anschlussmodule (16) und die Logikregeln zum Erzeugen von Steuerungssignalen in Abhängigkeit von Eingangssignalen unterscheiden.

8. Sicherheitssteuerung (10) nach einem der vorhergehenden Ansprüche, wobei sich mindestens einige aus der Vielzahl von Steuerungsprogrammen untereinander durch die an den Eingängen (18) und/oder Ausgängen (22) anzuschließenden Sensoren (20) und/oder Aktoren (24) unterscheiden.

9. Sicherheitssteuerung (10) nach einem der vorhergehenden Ansprüche, wobei sich mindestens einige aus der Vielzahl von Steuerungsprogrammen untereinander durch die Anzahl angeschlossener Anschlussmodule (16) unterscheiden.

10. Sicherheitssteuerung nach einem der vorhergehenden Ansprüche, wobei die Steuerungseinheit (14) eine Schnittstelle (52) für externe Steuerungseinheiten (54) aufweist, und wobei die Auswahl des Steuerungsprogramms von Typ und Reihenfolge angeschlossener externer Steuerungseinheiten (54) und/oder deren Anschlussmodulen abhängig ist.

11. Sicherheitssteuerung (10) nach einem der vorhergehenden Ansprüche, wobei die Steuerungseinheit (14) dafür ausgebildet ist, nach erkannter Veränderung von Typ und Reihenfolge angeschlossener Anschlussmodule (16) das ausgewählte Steuerungsprogramm erst nach einer Autorisierung auszuführen.

12. Verfahren zum Programmieren oder Umprogrammieren einer modularen Sicherheitssteuerung (10) nach einem der vorhergehenden Ansprüche, wobei das Steuerungsprogramm **dadurch** festgelegt wird, dass Anschlussmodule (16) bestimmten Typs und in bestimmter Reihenfolge an die Steuerungseinheit (14) angeschlossen werden, wobei eine Steuerungseinheit (14) der Sicherheitssteuerung (10) anhand des Typs und der Reihenfolge der derart angeschlossenen Anschlussmodule (16) eines aus einer Vielzahl von fertigen Steuerungsprogrammen, die in der Steuerungseinheit (14) für eine Vielzahl von Anwendungen implementiert sind, auswählt und ausführt.

13. Verfahren nach Anspruch 12,
wobei das Steuerungsprogramm **dadurch** festgelegt wird, dass Anschlussmodule (16) hinzugefügt, entfernt oder vertauscht werden.

14. Verfahren nach Anspruch 12 oder 13,
wobei das Steuerungsprogramm **dadurch** festgelegt wird, dass eine externe Steuerungseinheit (14) angeschlossen, entfernt oder in ihrer Modulkonfiguration verändert wird.

15. Verfahren nach einem der Ansprüche 12 bis 14,
wobei nach dem Programmieren oder Umprogrammieren die Verbindungen von Sensoren (20) an Eingänge (18) und/oder die Verbindungen von Aktoren (24) an Ausgänge (22) verändert werden.

## Claims

1. A modular safety controller (10) with at least one connection module (16) having at least one input (18) for the connection of sensors (20) and/or at least one output (22) for the connection of actuators (24), and with a control unit (14) configured to execute a control program that generates a control signal at the outputs (22) in dependence of input signals at the inputs (18),
**characterized in that**
a plurality of complete control programs for a plurality of applications is implemented in the control unit (14), and **in that** the control unit (14) is configured to select and execute one out of the plurality of control programs based on the type and sequence of connected connection modules (16).

2. The safety controller (10) according to claim 1,
wherein a first connection module (16) is connected to the control unit and the other connection modules (16) are connected to only one upstream connection module (16), respectively, such that the control unit (14) and the connection modules (16) form a module series.

3. The safety controller (10) according to claim 2,
wherein the connection modules (16) are arranged in a housing, respectively, having a mutually identical external geometry, and wherein each connection module (16) has a connection for an upstream module (12, 16) and a connection for a downstream module (16) of the module series.

4. The safety controller (10) according to any of the preceding claims,
wherein the control unit (14) forms a control module (12), in particular is arranged within a housing with an identical external geometry as the housing of a connection module (16).

5. The safety controller (10) according to any of the preceding claims,
wherein the type of a connection module (16) depends on the number of inputs (18) and/or outputs (22).

6. The safety controller (10) according to any of the preceding claims,
wherein the connection modules (16) are configured to register themselves at the control unit (14) with an information about their own type, or wherein the control unit (14) is configured to interrogate the type of a connected connection module (16).

7. The safety controller (10) according to any of the preceding claims,
wherein at least some of the plurality of control programs differ from one another by the sequence of the connection modules (16) and the rules of logic for the generation of control signals in dependence of input signals.

8. The safety controller (10) according to any of the preceding claims,
wherein at least some of the plurality of control programs differ from one another by the sensors (20) and/or actuators (24) to be connected at the inputs (18) and/or outputs (22).

9. The safety controller (10) according to any of the preceding claims,
wherein at least some of the plurality of control programs differ from one another by the number of connected connection modules (16).

10. The safety controller according to any of the preceding claims,
wherein the control unit (14) includes an interface (52) for external control units (54), and wherein the selection of the control program depends on the type and sequence of connected external control units (54) and/or their connection modules.

11. The safety controller (10) according to any of the preceding claims,
wherein the control unit (14) is configured to execute, after a detected alteration in type and sequence of connected connection modules (16), the selected control program only after an authorization.

12. A method for programming or reprogramming a modular safety controller (10) according to one of the preceding claims, wherein the control program is determined by connecting connection modules (16) of a certain type and in a certain sequence to the control unit (14), wherein a control unit (14) of the safety controller (10) selects and executes, based on the type and sequence of the connected connection modules (16), one out of a plurality of complete control programs that are implemented in the control unit (14) for a plurality of applications.

13. The method according to claim 12,
wherein the control program is determined by adding, removing or exchanging connection modules (16).

14. The method according to claim 12 or 13,
wherein the control program is determined by connecting or removing an external control unit (54) or altering its module configuration.

15. The method according to one of claims 12 to 14,
wherein after the programming or reprogramming the connections from sensors (20) to inputs (18) and/or the connections of actuators (24) to outputs (22) is altered.

## Revendications

1. Commande de sécurité modulaire (10) avec au moins un module de connexion (16) ayant au moins une entrée (18) pour la connexion des capteurs (20) et/ou au moins une sortie (22) pour la connexion d'actionneurs (24) et avec une unité de commande (14) configurée pour exécuter un logiciel de commande qui génère aux sorties (22) un signal de commande en dépendance des signaux d'entrée aux entrées (18), **caractérisé en ce qu'**une pluralité des logiciels de commande complets pour une pluralité d'applications est implémentée dans l'unité de commande (14) et **en ce que** l'unité de commande (14) est configurée pour sélectionner et pour exécuter un des plusieurs des logiciels de commande basé sur le type et la séquence des modules de connexion (16) connectés.

2. Commande de sécurité (10) selon la revendication 1, **caractérisé en ce qu'**un premier module de la connexion (16) est connecté à l'unité de commande et les autres modules de connexion (16) sont respectivement connectés seulement à un module de connexion (16) arrangé en amont, de sorte que l'unité de commande (14) et les modules de connexion (16) forment une série de modules.

3. Commande de sécurité (10) selon la revendication 2, **caractérisé en ce que** les modules de connexion (16) sont respectivement disposés dans un boîtier ayant une géométrie externe identique mutuellement, et **en ce que** chaque module de connexion (16) comprend une connexion pour un module en amont (12, 16) et une connexion pour un module (16) en aval de la série de modules.

4. Commande de sécurité (10) selon l'une des revendications précédentes, **caractérisé en ce que** l'unité de commande (14) forme un module de commande (12) et, en particulier, est arrangé dans un boîtier avec une géométrie externe identique comme le boîtier d'un module de connexion (16).

5. Commande de sécurité (10) selon l'une des revendications précédentes, **caractérisé en ce que** le type d'un module de connexion (16) dépend du nombre des entrées (18) et/ou des sorties (22).

6. Commande de sécurité (10) selon l'une des revendications précédentes, **caractérisé en ce que** les modules de connexion (16) sont configurés pour s'enregistrer à l'unité de commande (14) avec une information de leur propre type, ou **en ce que** l'unité de commande (14) est configuré pour interroger le type d'un module de connexion (16) connecté.

7. Commande de sécurité (10) selon l'une des revendications précédentes, **caractérisé en ce qu'**au moins certaines de la pluralité des logiciels de commande différent mutuellement par la séquence des modules de connexion (16) et par les règles de la logique pour générer des signaux de commande en dépendance de signaux d'entrée.

8. Commande de sécurité (10) selon l'une des revendications précédentes, **caractérisé en ce qu'**au moins certaines de la pluralité des logiciels de commande différent mutuellement par les capteurs (20) et/ou d'actionneurs (24) qui doivent être connectés aux entrées (18) et/ou sorties (22).

9. Commande de sécurité (10) selon l'une des revendications précédentes, **caractérisé en ce qu'**au moins certaines de la pluralité des logiciels de commande différent mutuellement par le nombre des modules de connexion (16) connectés.

10. Commande de sécurité (10) selon l'une des revendications précédentes, **caractérisé en ce que** l'unité de commande (14) comprend une interface (52) pour des unités de commande externes (54), et **en ce que** la sélection du logiciel de commande dépend du type et de la séquence des unités de commande externe connecté (54) et/ou leur modules de connexion.

11. Commande de sécurité (10) selon l'une des revendications précédentes, **caractérisé en ce que** l'unité de commande (14) est configurée pour exécuter le logiciel de commande sélecté après l'indentification d'une modification du type et de la séquence des modules de connexion connectés (16) et seulement après une autorisation.

12. Procédé pour programmer ou reprogrammer une commande de sécurité modulaire (10) selon l'une des revendications précédentes, **caractérisé en ce que** le logiciel de commande est déterminé **en ce que** des modules de connexion (16) d'un certain type et d'un certain séquence sont connectés à l'unité de commande (14), dans lequel une unité de commande (14) de la commande de sécurité (10) sélecte et exécute basé sur le type et la séquence des modules de connexion (16) ainsi connectés un des plusieurs des logiciels commande complets qui sont implémentés dans l'unité de commande (14) pour une pluralité d'applications.

13. Procédé selon la revendication 12, **caractérisé en ce que** le logiciel de commande est déterminé en sorte que des modules de connexion (16) sont ajoutés, enlevés ou échangés.

14. Procédé selon la revendication 12 ou 13, **caractérisé en ce que** le logiciel de commande est déterminée en sorte qu'une unité de commande externe est connectée, enlevée ou modifiée dans sa configuration du module.

15. Procédé selon l'une des revendications 12 à 14, **caractérisé en ce qu'**après la programmation ou la reprogrammation les connexions des capteurs (20) aux entrées (18) et/ou les connexions d'actionneurs (24) aux sorties (22) sont changées.
